# EUROPÄISCHE PATENTSCHRIFT

(11) **EP 3 323 629 B1**
(45) Veröffentlichungstag und Bekanntmachung des Hinweises auf die Patenterteilung: **12.06.2019**
(21) Anmeldenummer: 16199940.4
(22) Anmeldetag: 22.11.2016
(51) Int. Cl.: B60B 27/00, B62D 7/18, B60B 27/02, B60B 35/00, F16C 35/06

(54) **RADLAGERANORDNUNG**
WHEEL BEARING ASSEMBLY
SYSTÈME DE ROULEMENT DE ROUE

(43) Veröffentlichungstag der Anmeldung: 23.05.2018
(73) Patentinhaber: Georg Fischer GmbH, 40822 Mettmann (DE); Georg Fischer Automotive (Kunshan) Co Ltd., Jiangsu 215300 (CN); Georg Fischer Automobilguss GmbH, 78224 Singen (DE)
(72) Erfinder: Hartmann, Stephan, 78244 Gottmadingen (DE); Kupferschmid, Roger, 8261 Hemishofen (CH); Mahnig, Dominik, 8200 Schaffhausen (CH)
(74) Vertreter: Fenner, Seraina

(56) Entgegenhaltungen:
- WO-A1-02/102607
- DE-A1- 4 006 463
- DE-A1- 4 117 334
- DE-A1- 10 336 797
- DE-A1-102007 024 325

## Beschreibung

Die Erfindung betrifft eine Radlageranordnung für Kraftfahrzeuge insbesondere Nutzfahrzeuge zur gezielten Einbringung von Druckspannung beinhaltend einen Achsschenkel, einen Achszapfen, wobei der Achszapfen integral am Achsschenkel angeformt und mit dem Achsschenkel einstückig ausgebildet ist, eine Schulter, wobei die Schulter eine Schnittstelle zwischen Achszapfen und Achsschenkel bildet, eine Verrundung, wobei die Verrundung den Übergang zwischen Achszapfen und Schulter bildet, eine Bohrung, ein Radlager, wobei das Radlager am Achszapfen angeordnet ist und eine Zugschraube, wobei die Zugschraube in der Bohrung angeordnet ist.

Aus dem Stand der Technik sind Radlageranordnungen bekannt, die einen Achszapfen mit Aussengewinde aufweisen und das Radlager mittels Mutter vorgespannt wird, die DE 25 43 210 A1 offenbart eine solche Ausführungsform. Nachteilig hierbei ist, dass der Achszapfen beim Anziehen der Mutter auf Zug belastet wird, wodurch die Aufnahme von auftretenden Betriebskräften entsprechend eingeschränkt ist.

Die DE 40 06 463 A1 offenbart eine Radlageranordnung, wobei die Radlagerung mit Zugschraube und Unterlagscheibe am Lagerzapfen befestigt ist und zwischen Schraubenkopf bzw. Unterlagscheibe und der Stirnseite des Lagerzapfens kein direkter Kontakt besteht. Durch diese Anordnung werden zwar keine schädlichen Zugspannungen in den Zapfen eingeleitet aber auch ebenfalls keine Druckspannungen, die zu einer Steigerung der dynamischen Belastbarkeit führen. Es ist Aufgabe der Erfindung eine Radlageranordnung vorzuschlagen, welche gezielt Druckspannungen in den Achszapfen einzubringen vermag und dabei die Druckkräfte entsprechend der notwendigen Lagervorspannung auf den Radlagerinnenring und den Achszapfen aufteilt.

Diese Aufgabe wird erfindungsgemäss dadurch gelöst, dass der Schraubenkopf der Zugschraube an der Stirnseite des Achszapfens angliegt, dass die Radlageranordnung ein federndes Element aufweist, und der Radlagerinnenring und der Achszapfen auf Druck vorgespannt sind oder der Schraubenkopf der Zugschraube an der Innenseite des Achsschenkels anliegt und auf der einen Seite der Schnittstelle angeordnet ist und das Aussengewinde der Zugschraube auf der anderen Seite der Schulter bzw. der Schnittstelle angeordnet ist und der Radlagerinnenring und der Achszapfen auf Druck vorgespannt sind.

Die erfindungsgemässe Radlageranordnung für Kraftfahrzeuge insbesondere Nutzfahrzeuge beinhaltet einen Achsschenkel, einen Achszapfen, wobei der Achszapfen integral am Achsschenkel angeordnet ist. Achszapfen und Achsschenkel sind einstückig bzw. einteilig ausgebildet, wodurch Herstellkosten optimiert werden können.

Die Schulter bildet eine Schnittstelle zwischen Achsschenkel und Achszapfen so dass die erfindungsgemässe Radlageranordnung in einen Achszapfen- und einen Achsschenkelbereich entlang der Schnittstelle bzw. der Schulter unterteilt werden kann.

Im Übergangsbereich zwischen Achszapfen und Schulter ist eine Verrundung angeordnet, wodurch der Spannungsverlauf im Teil optimiert wird. Vorzugsweise ist die Verrundung als eine variable Bogenform ausgelegt, die individuell auf die Spannung aufgrund der auftretenden Belastung definiert werden kann. Selbstverständlich kann aber auch ein konstanter Radius als Verrundung zwischen Achszapfen und Schulter eingesetzt werden.

Die Bohrung dient der Aufnahme der Zugschraube, wobei die Zugschraube zum Anbringen der Vorspannung auf den Radlagerinnenring und den Achszapfen oder nur auf den Radlagerinnenring oder nur auf den Achszapfen dient. Um die Zugschraube zu befestigen ist in der Bohrung vorzugsweise ein Innengewinde angeordnet.

Alternativ besteht die Möglichkeit eine Durchgangsbohrung vorzusehen und die Zugschraube mit einer Mutter, die an der Stirnseite des Lagerzapfens angeordnet ist damit zu verschrauben.

Eine bevorzugte Ausführungsform der Radlageranordnung weist einen Schraubenkopf der Zugschraube auf, der an der Stirnseite des Achszapfens anliegt.

In einer bevorzugten Ausführungsform weist die erfindungsgemässe Radlageranordnung ein federndes Element auf.

Mittels des federnden Elements wird eine Vorspannung des Radlagerinnenrings des Radlagers und des Achszapfens oder nur des Radlagerinnenrings erzielt, wobei die Radlagervorspannung durch das federnde Element vorzugsweise auf max. 200 kN limitiert ist.

Vorzugsweise weist die Zugschraube einen Schraubenkopf und ein Aussengewinde auf, wobei die Zugschraube derart in der Radlageranordnung angeordnet ist, dass das Aussengewinde der Zugschraube und der Schraubenkopf jeweils auf der anderen Seite der Schnittstelle bzw. der Schulter angeordnet sind.

Das heisst, dass das Innengewinde und somit auch das Aussengewinde der Zugschraube bspw. im Bereich des Achsschenkels angeordnet sind, wodurch der Schraubenkopf dann im Achszapfenbereich bzw. auf der anderen Seite der Schnittstelle der Lageranordnung angeordnet ist. Wird die Zugschraube in diese Richtung verbaut ist vorzugsweise ein federndes Element zwischen Schraubenkopf und Radlagerinnenring vorzusehen.

Die alternative Ausführungsform ist, dass das Innengewinde und somit das Aussengewinde der Zugschraube im Achszapfenbereich angeordnet ist, wobei dies nicht bedeutet, im Achszapfen selbst muss das Innengewinde angeordnet sein sondern auch mittels eines zusätzlichen Sicherungselements wie bspw. einer Mutter kann das Innengewinde anschliessend an den Achszapfen folgen, wodurch das in das Innengewinde einzuschraubende Aussengewinde der Zugschraube ebenso im Achszapfenbereich bzw. auf der anderen Seite der Schnittstelle angeordnet ist wenn der Schraubenkopf im bzw. am Achsschenkel angeordnet ist.

Ebenso möglich ist eine Ausführungsform die keine Durchgangsbohrung sondern eine Sacklochbohrung mit Innengewinde aufweist und auch in dieser Ausführungsform das Innengewinde bzw. das Aussengewinde der Zugschraube und der Schraubenkopf jeweils auf der anderen Seite der Schnittstelle angeordnet sind. Durch die oben erwähnten Möglichkeiten der Anordnung der Zugschraube kann eine Vorspannung im Achszapfen erzielt werden, wodurch der Achszapfen auf Druck vorgespannt wird und das wiederum höhere Belastungskräfte zulässt.

Als weitere vorteilhafte Ausführungsform besteht auch die Möglichkeit direkt am Ende des Achszapfens ein Aussengewinde vorzusehen auf das eine Mutter aufschraubbar ist um am Radlagerinnenring eine Vorspannung zu erwirken.

Es hat sich als vorteilhaft erwiesen, dass das federnde Element an der Stirnseite des Radlagerinnenrings auf der vom Achsschenkel abgewandten Seite angeordnet ist. Dies ermöglicht das Aufbringen einer Vorspannung auf den Lagerinnenring aber dennoch auch das Aufbringen einer Vorspannung auf den Achszapfen durch den Schraubenkopf. Die Vorspannung wird durch das federnde Element entsprechend aufgeteilt. Selbstverständlich können zwischen Radlagerinnenring und federndem Element noch weitere Anlaufscheiben angeordnet sein, was keinen Einfluss auf die Funktion des federnden Elements und die erzielte Vorspannung und die Kräfteverteilung hätte, sie dient vielmehr einer optimalen Auflagefläche.

Als vorteilhafte Ausführungsform hat sich auch eine Radlageranordnung gezeigt bei der der Schraubenkopf der Zugschraube an der Innenseite des Achsschenkels anliegt und auf der einen Seite der Schnittstelle angeordnet ist und das Aussengewinde der Zugschraube auf der anderen Seite der Schulter bzw. Schnittstelle angeordnet ist und der Radlagerinnenring und Achszapfen vorgespannt sind.

Das Aussengewinde der Zugschraube kann im Achszapfen oder mit einer Mutter, wie zuvor bereits erwähnt, verschraubt werden. Vorzugsweise ist ein federndes Element zwischen der Mutter und dem Radlagerinnenring vorzusehen, das wiederum zur Kräfteverteilung dient.

Vorteilhaft ist es das federnde Element aus einem Kunststoff herzustellen da Kunststoff eine gewisse Elastizität aufweist und damit die federnde Wirkung erzielt wird. Das federnde Element kann auch aus unterschiedlichen Materialien bestehen, die eine unterschiedliche Elastizität aufweisen, die bspw. bereichsweise zum Einsatz kommen.

Eine weitere vorteilhafte Ausführungsform besteht darin, dass das federnde Element als Druckfeder ausgebildet ist. Selbstverständlich ist auch hier eine Kombination von Kunststoff und Druckfeder in unterschiedlichen Bereichen möglich wie auch eine Druckfeder aus metallischem Werkstoff anwendbar ist.

Um die Zugspannung in Zug- und Druckbelastung im Achszapfen umzuwandeln damit der Achszapfen höhere Betriebskräfte, die durch die vertikale Radlast und die Seiten- und Bremslast auftreten, aufnehmen kann, ist das Aussengewinde der Zugschraube und dessen Schraubenkopf jeweils auf der anderen Seite der Schnittstelle bzw. Schulter angeordnet bzw. jeweils eines der beiden im Achszapfenbereich und das andere Bestandteil der Zugschraube im Achsschenkelbereich.

Ein weiterer Vorteil dieser Radlageranordnung besteht auch darin, dass der Achszapfen nicht hohl ist und dadurch kein Schmutz von der Fahrzeuginnenseite her durch den Achszapfen hindurch in das Radlager eindringen kann. Die Zugschraube hat somit auch eine abdichtende Funktion gegenüber dem von der Fahrzeuginnenseite auftretenden Schmutz. Die Radlageranordnung weist demzufolge keine von der Fahrzeuginnenseite zur Fahrzeugaussenseite durchgehenden Hohlräume auf bzw. eine Durchgangsbohrung wird durch die Anordnung einer Zugschraube darin verschlossen.

Als vorteilhafte Ausgestaltung einer erfindungsgemässen Radlageranordnung ist die Zugschraube vorzugsweise an der Stirnseite des Achszapfens mit einer Mutter verschraubt, das heisst also, dass die Radlageranordnung eine Durchgangsbohrung aufweist durch welche die Zugschraube hindurchragt und an der Stirnseite des Achszapfens mit der Mutter verschraubt ist. Als weitere Ausgestaltung der erfindungsgemässen Radlageranordnung besteht die Möglichkeit ein federndes Element zwischen der Mutter und dem Radlagerinnenring vorzusehen, welches die optimale Verteilung der Vorspannung auf Achszapfen und Radlagerinnenring ermöglicht.

Als vorteilhaft hat sich gezeigt, wenn der Achsschenkel mit angeformtem Achszapfen aus Eisenguss hergestellt ist und somit ein einstückiges Gussteil bildet. Ausführungsbeispiele der Erfindung werden anhand der Figuren beschrieben, wobei sich die Erfindung nicht nur auf die Ausführungsbeispiele beschränkt. Es zeigen:
- Fig. 1: einen Längsschnitt durch eine Ausführungsform der erfindungsgemässe Radlageranordnung bei welcher der Schraubenkopf an der Stirnseite des Achszapfens angeordnet ist,
- Fig. 2: eine Ausführungsform der erfindungsgemässen Radlageranordnung bei der der Schraubenkopf an der Innenseite des Achsschenkels angeordnet ist,
- Fig. 3: eine weitere Ausführungsform der erfindungsgemässen Radlageranordnung bei der der Schraubenkopf an der Innenseite des Achsschenkels angeordnet ist und
- Fig. 4: eine weitere Ausführungsform der erfindungsgemässen Radlageranordnung bei der der Schraubenkopf an der Innenseite des Achsschenkels angeordnet ist.

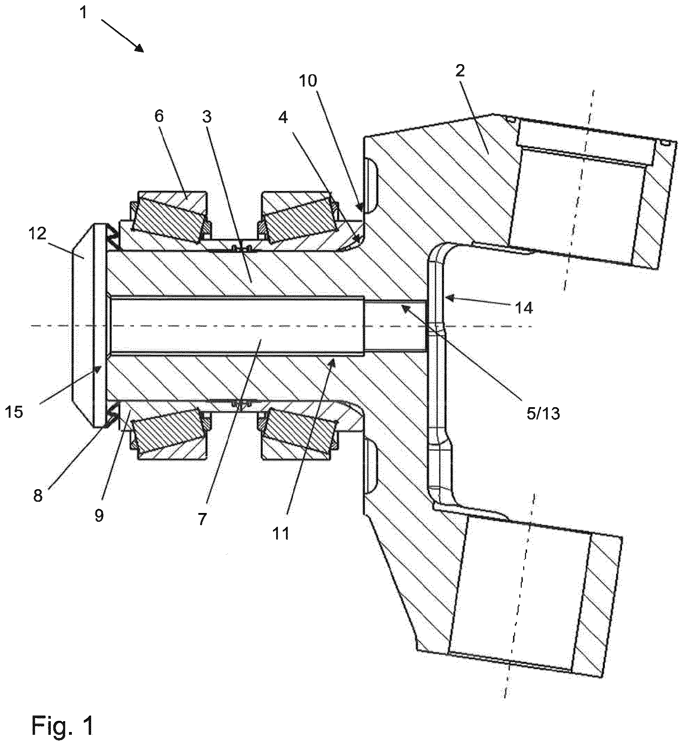

In Fig. 1 ist eine erfindungsgemässe Radlageranordnung 1 im Längsschnitt dargestellt. Die Radlageranordnung 1 weist einen Achsschenkel 2 auf, wobei am Achsschenkel 2 ein Achszapfen 3 integral angeordnet ist. Der Achsschenkel 2 und der Achszapfen 3 sind zusammen einstückig ausgebildet, vorteilhaft ist es, wenn der Achsschenkel 2 und der Achszapfen 3 aus Eisenguss als einstückiges Teil ausgebildet sind, wobei auch andere Materialien und Herstellverfahren denkbar sind.

Um im Übergangsbereich zwischen Achszapfen 3 und Achsschenkel 2 einen möglichst optimalen Spannungsverlauf zu erhalten, liegt dort eine Verrundung 4 vor. Die Verrundung 4 kann als variabler Bogenverlauf wie auch als konstanter Radius ausgebildet sein. Die genaue Kontur bzw. der genaue Verlauf der Verrundung 4 ist jeweils entsprechend den Belastungen der Radlageranordnung zu definieren.

Am Aussenumfang des Achszapfens 3 ist ein Radlager 6 angeordnet. Durch die Zugschraube 7 ist das Radlager 6 axial über den Radlagerinnenring 9 fixiert. Die Zugschraube 7 ragt durch die Bohrung 11 hindurch, die durch den Achszapfen 3 in den Achsschenkel 2 verläuft. Vorzugsweise ist die Bohrung 11 als Durchgangsbohrung ausgebildet, wobei auch eine Sacklochbohrung anwendbar ist. Am Ende der Bohrung 5 bzw. im Achsschenkelbereich ist ein Innengewinde 5 zur Befestigung der Zugschraube 7 angeordnet, bzw. im Achsschenkel 2. In Fig. 1 ist eine Ausführungsform der erfindungsgemässen Radlageranordnung 1 abgebildet, die das Innengewinde 5 durch die Anordnung im Achsschenkel 2 bzw. auf der anderen Seite der Schnittstelle 10, die durch die Schulter 10 gebildet wird, wie der Schraubenkopf der Zugschraube angeordnet ist, der im Bereich des Achszapfens angeordnet ist, zeigt. Dies ermöglicht die Aufteilung von Zugspannung im Achszapfen 3 in eine Zug- und Druckbelastung durch das Vorspannen des Radlagerinnenrings 9 oder das Vorspannen des Radlagerinnenrings 9 und des Achszapfens 3. Somit ist das Innengewinde 5 in axialer Richtung betrachtet neben bzw. hinter dem Radlager 6 angeordnet. Der Schraubenkopf 12 der Zugschraube 7 liegt an der Stirnseite des Achszapfens 3 an. Zudem weist diese Ausführungsform der erfindungsgemässen Radlageranordnung 1 ein federndes Element 8 auf, das zwischen Schraubenkopf 12 und Radlagerinnenring 9 zur optimalen Vorspannungsverteilung dient.

Durch die Zugschraube 7 bzw. den Schraubenkopf 12 wird das federnde Element 8 an den Radlagerinnenring 9 gedrückt und spannt ihn dadurch vor. Das federnde Element 8 kann auch so ausgebildet sein, dass nicht nur der Radlagerinnenring 9 sondern auch der Achszapfen 3 vorgespannt wird wodurch sich die Beanspruchung in beiden Fällen in Zug und Druck aufteilt.

Durch die Elastizität des federnden Elements 8 wird die Zug- und Druckbelastung ebenfalls entsprechend optimal verteilt.

Das federnde Element 8 kann bspw. aus Kunststoff bestehen und durch die elastische Eigenschaft des Materials die federnde Funktion aufweisen oder auch eine Druckfeder ist für eine solche Anwendung vorstellbar.

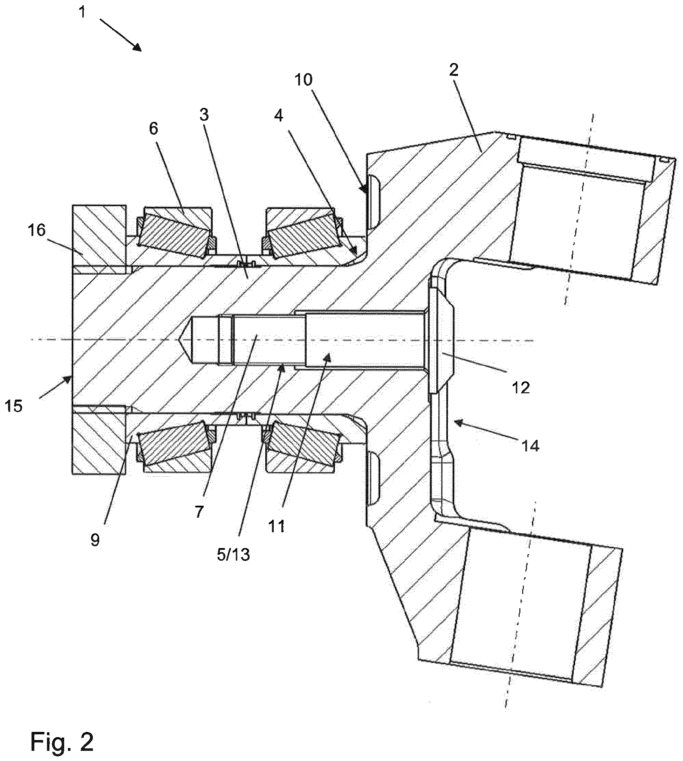

Fig. 2 zeigt eine weitere Ausführungsform einer erfindungsgemässen Radlageranordnung 1 bei welcher der Schraubenkopf 12 der Zugschraube 7 an der Innenseite 14 des Achsschenkels 2 angeordnet ist. Die Zugschraube 7 ragt in die Bohrung 11, welche hier als Sacklochbohrung ausgebildet, wobei auch Durchgangsbohrungen denkbar sind, hinein und ist dort mit ihrem Aussengewinde 13 verschraubt. Aus der Fig. 2 ist klar zu erkennen, dass der Schraubenkopf 12 auf der einen Seite der Schulter bzw. der Schnittstelle 10 angeordnet ist und das Aussengewinde 13 auf der anderen, was wiederum die Vorspannung im Achszapfen ermöglicht. Um auch das Radlager 6 bzw. dessen Radlagerinnenring 9 vorzuspannen ist am äusseren Ende des Achszapfens 3 ein Aussengewinde angeordnet auf das eine Mutter 16 aufgeschraubt ist. Diese dient zur Vorspannung des Radlagerinnenrings 9.

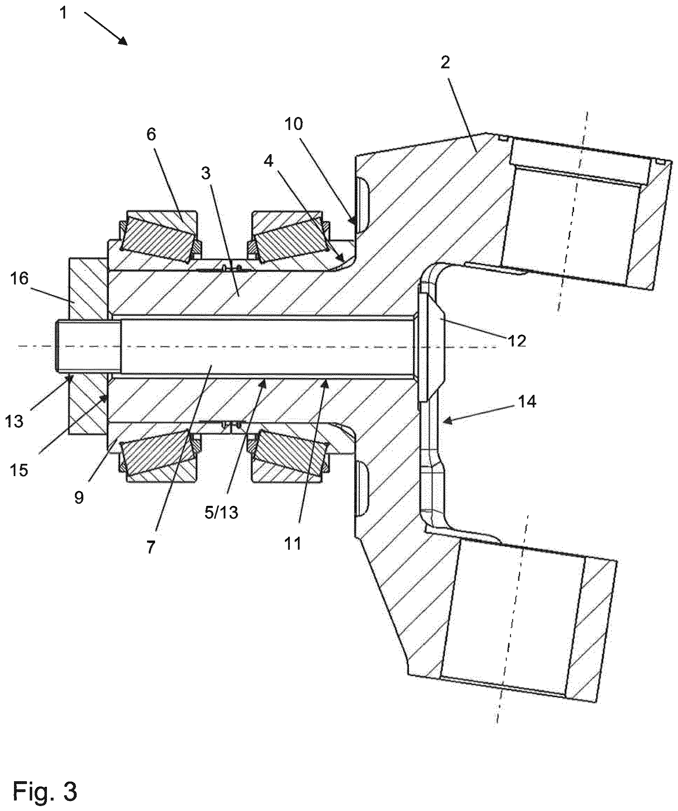

Fig. 3 zeigt ebenfalls eine weitere Ausgestaltung der erfindungsgemässen Radlageranordnung 1. Auch hier ist der Schraubenkopf 12 an der Innenseite 14 des Achsschenkels 2 angeordnet, wobei hier die Bohrung 11 durchgehend ist und das Aussengewinde 13 der Zugschraube 7 mit einer Mutter 16 verschraubt wird. Auch in dieser Ausgestaltung der erfindungsgemässen Radlageranordnung 1 ist der Schraubenkopf 12 auf der einen Seite der Schulter bzw. Schnittstelle 10 angeordnet und das Aussengewinde 13 der Zugschraube 7 auf der anderen Seite.

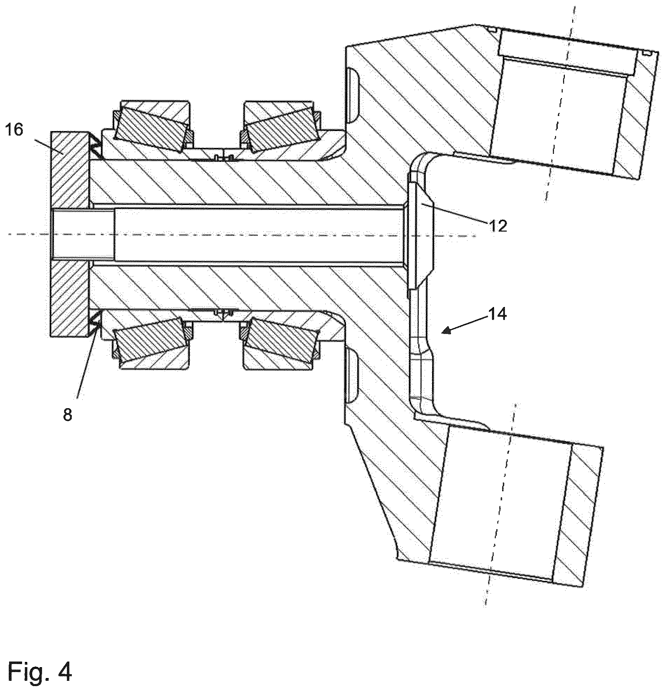

Fig. 4 zeigt dieselbe Ausführungsform wie Fig. 3 wobei noch ein federndes Element 8 an der Radlageranordnung 1 angeordnet ist. Das federnde Element 8 ist vorzugsweise zwischen der Mutter 16 und dem Radlagerinnenring 9 angeordnet um auch hier die aufgebrachte Vorspannung optimal zu verteilen.

### Bezugszeichenliste

- 1: Radlageranordnung
- 2: Achsschenkel
- 3: Achszapfen
- 4: Verrundung
- 5: Innengewinde
- 6: Radlager
- 7: Zugschraube
- 8: Federndes Element
- 9: Radlagerinnenring
- 10: Schulter / Schnittstelle zwischen Achsschenkel und Achszapfen
- 11: Bohrung
- 12: Schraubenkopf der Zugschraube
- 13: Aussengewinde der Zugschraube
- 14: Innenseite Achsschenkel
- 15: Stirnseite Achszapfen
- 16: Mutter

## Patentansprüche

1. Radlageranordnung (1) für Kraftfahrzeuge insbesondere Nutzfahrzeuge zur gezielten Einbringung von Druckspannung beinhaltend einen Achsschenkel (2), einen Achszapfen (3), wobei der Achszapfen (2) integral am Achsschenkel (2) angeformt und mit dem Achsschenkel (2) einstückig ausgebildet ist, eine Schulter (10), wobei die Schulter (10) eine Schnittstelle zwischen Achszapfen (3) und Achsschenkel (2) bildet, eine Verrundung (4), wobei die Verrundung (4) den Übergang zwischen Achszapfen (3) und Schulter (10) bildet, eine Bohrung (11), ein Innengewinde (5), ein Radlager (6), wobei das Radlager (6) am Achszapfen (3) angeordnet ist, eine Zugschraube (7), wobei die Zugschraube (7) in der Bohrung (11) angeordnet und mit dem Innengewinde (5) in der Bohrung (11) verschraubt ist, **dadurch gekennzeichnet, dass** der Schraubenkopf (12) der Zugschraube (7) an der Stirnseite (15) des Achszapfens (3) anliegt, dass die Radlageranordnung (1) ein federndes Element (8) aufweist und der Radlagerinnenring (9) sowie der Achszapfen (3) auf Druck vorgespannt sind.

2. Radlageranordnung (1) für Kraftfahrzeuge insbesondere Nutzfahrzeuge zur gezielten Einbringung von Druckspannung beinhaltend einen Achsschenkel (2), einen Achszapfen (3), wobei der Achszapfen (2) integral am Achsschenkel (2) angeformt und mit dem Achsschenkel (2) einstückig ausgebildet ist, eine Schulter (10), wobei die Schulter (10) eine Schnittstelle zwischen Achszapfen (3) und Achsschenkel (2) bildet, eine Verrundung (4), wobei die Verrundung (4) den Übergang zwischen Achszapfen (3) und Schulter (10) bildet, eine Bohrung (11), ein Radlager (6), wobei das Radlager (6) am Achszapfen (3) angeordnet ist und eine Zugschraube (7), wobei die Zugschraube (7) in der Bohrung (11) angeordnet ist, **dadurch gekennzeichnet, dass** der Schraubenkopf (12) der Zugschraube (7) an der Innenseite (14) des Achsschenkels anliegt und auf der einen Seite der Schnittstelle (10) angeordnet ist und das Aussengewinde (13) der Zugschraube (7) auf der anderen Seite der Schulter bzw. der Schnittstelle (10) angeordnet ist und der Radlagerinnenring (9) und der Achszapfen (3) auf Druck vorgespannt sind.

3. Radlageranordnung (1) nach Anspruch 1, **dadurch gekennzeichnet, dass** das federnde Element (8) aus einem Kunststoff hergestellt ist.

4. Radlageranordnung (1) nach einem der Ansprüche 1 oder 3, **dadurch gekennzeichnet, dass** das federnde Element (8) als Druckfeder (14) ausgebildet ist.

5. Radlageranordnung (1) nach einem der Ansprüche 1, 3 oder 4, **dadurch gekennzeichnet, dass** das federnde Element (8) die Radlagervorspannung bzw. die Vorspannung auf den Radlagerinnenring (9) auf max. 200 kN limitiert.

6. Radlageranordnung (1) nach einem der Ansprüche 1, 3, 4 oder 5 **dadurch gekennzeichnet, dass** das federnde Element (8) zwischen dem Schraubenkopf (12) und dem Radlagerinnenring (9) angeordnet ist.

7. Radlageranordnung (1) nach Anspruch 2, **dadurch gekennzeichnet, dass** die Zugschraube (7) mit einer an der Stirnseite (15) des Achszapfens (3) angeordneten Mutter (16) verschraubt ist.

8. Radlageranordnung (1) nach Anspruch 7, **dadurch gekennzeichnet, dass** ein federndes Element (8) zischen Mutter (16) und Radlagerinnenring (9) angeordnet ist.

9. Radlageranordnung (1) nach einem der vorangehenden Ansprüche, **dadurch gekennzeichnet, dass** der Achsschenkel (2) mit angegossenem Achszapfen (3) aus Eisenguss hergestellt ist.

## Claims

1. Wheel bearing arrangement (1) for motor vehicles, in particular commercial vehicles, for the targeted introduction of compressive stress, comprising a steering knuckle (2), an axle journal (3), the axle journal (2) being formed integrally on the steering knuckle (2) and being configured in one piece with the steering knuckle (2), a shoulder (10), the shoulder (10) forming an interface between the axle journal (3) and the steering knuckle (2), a rounded portion (4), the rounded portion (4) forming the transition between the axle journal (3) and the shoulder (10), a bore (11), an internal thread (5), a wheel bearing (6), the wheel bearing (6) being arranged on the axle journal (3), a tension bolt (7), the tension bolt (7) being arranged in the bore (11) and being screwed to the internal thread (5) in the bore (11), **characterized in that** the bolt head (12) of the tension bolt (7) bears against the end side (15) of the axle journal (3), and **in that** the wheel bearing arrangement (1) has a resilient element (8), and the wheel bearing inner ring (9) and the axle journal (3) are prestressed with a compressive load.

2. Wheel bearing arrangement (1) for motor vehicles, in particular commercial vehicles, for the targeted introduction of compressive stress, comprising a steering knuckle (2), an axle journal (3), the axle journal (2) being formed integrally on the steering knuckle (2) and being configured in one piece with the steering knuckle (2), a shoulder (10), the shoulder (10) forming an interface between the axle journal (3) and the steering knuckle (2), a rounded portion (4), the rounded portion (4) forming the transition between the axle journal (3) and the shoulder (10), a bore (11), a wheel bearing (6), the wheel bearing (6) being arranged on the axle journal (3), and a tension bolt (7), the tension bolt (7) being arranged in the bore (11), **characterized in that** the bolt head (12) of the tension bolt (7) bears against the inner side (14) of the steering knuckle and is arranged on the one side of the interface (10), and the external thread (13) of the tension bolt (7) is arranged on the other side of the shoulder or the interface (10), and the wheel bearing inner ring (9) and the axle journal (3) are prestressed with a compressive load.

3. Wheel bearing arrangement (1) according to Claim 1, **characterized in that** the resilient element (8) is manufactured from a plastic.

4. Wheel bearing arrangement (1) according to either of Claims 1 and 3, **characterized in that** the resilient element (8) is configured as a compression spring (14).

5. Wheel bearing arrangement (1) according to one of Claims 1, 3 or 4, **characterized in that** the resilient element (8) limits the wheel bearing prestress or the prestress on the wheel bearing inner ring (9) to a maximum of 200 kN.

6. Wheel bearing arrangement (1) according to one of Claims 1, 3, 4 or 5, **characterized in that** the resilient element (8) is arranged between the bolt head (12) and the wheel bearing inner ring (9).

7. Wheel bearing arrangement (1) according to Claim 2, **characterized in that** the tension bolt (7) is screwed to a nut (16) which is arranged on the end side (15) of the axle journal (3).

8. Wheel bearing arrangement (1) according to Claim 7, **characterized in that** a resilient element (8) is arranged between the nut (16) and the wheel bearing inner ring (9) .

9. Wheel bearing arrangement (1) according to one of the preceding claims, **characterized in that** the steering knuckle (2) with an integrally cast axle journal (3) is manufactured from cast iron.

## Revendications

1. Système de palier de roue (1) pour des véhicules automobiles, en particulier des véhicules utilitaires, pour l'application appropriée d'une contrainte de compression, comprenant une branche d'essieu (2), un tourillon d'essieu (3), dans lequel le tourillon d'essieu (3) est formé intégralement sur la branche d'essieu (2) et est formé d'un seul tenant avec la branche d'essieu (2), un épaulement (10), dans lequel l'épaulement (10) forme une interface entre le tourillon d'essieu (3) et la branche d'essieu (2), un arrondi (4), dans lequel l'arrondi (4) forme la transition entre le tourillon d'essieu (3) et l'épaulement (10), un alésage (11), un filet intérieur (5), un palier de roue (6), dans lequel le palier de roue (6) est disposé sur le tourillon d'essieu (3), une vis de traction (7), dans lequel la vis de traction (7) est disposée dans l'alésage (11) et est vissée dans l'alésage (11) avec le filet intérieur (5), **caractérisé en ce que** la tête de vis (12) de la vis de traction (7) s'applique sur le côté frontal (15) du tourillon d'essieu (3), **en ce que** le système de palier de roue (1) présente un élément à ressort (8) et la bague intérieure du palier de roue (9) ainsi que le tourillon d'essieu (3) sont précontraints en compression.

2. Système de palier de roue (1) pour des véhicules automobiles, en particulier des véhicules utilitaires, pour l'application appropriée d'une contrainte de compression, comprenant une branche d'essieu (2), un tourillon d'essieu (3), dans lequel le tourillon d'essieu (3) est formé intégralement sur la branche d'essieu (2) et est formé d'un seul tenant avec la branche d'essieu (2), un épaulement (10), dans lequel l'épaulement (10) forme une interface entre le tourillon d'essieu (3) et la branche d'essieu (2), un arrondi (4), dans lequel l'arrondi (4) forme la transition entre le tourillon d'essieu (3) et l'épaulement (10), un alésage (11), un palier de roue (6), dans lequel le palier de roue (6) est disposé sur le tourillon d'essieu (3) et une vis de traction (7), dans lequel la vis de traction (7) est disposée dans l'alésage (11), **caractérisé en ce que** la tête de vis (12) de la vis de traction (7) s'applique sur le côté intérieur (14) de la branche d'essieu et est disposée sur un premier côté de l'interface (10) et le filet extérieur (13) de la vis de traction (7) est disposé sur l'autre côté de l'épaulement ou de l'interface (10) et la bague intérieure du palier de roue (9) et le tourillon d'essieu (3) sont précontraints en compression.

3. Système de palier de roue (1) selon la revendication 1, **caractérisé en ce que** l'élément à ressort (8) est fabriqué en une matière plastique.

4. Système de palier de roue (1) selon l'une des revendications 1 ou 3, **caractérisé en ce que** l'élément à ressort (8) est formé par un ressort de compression (14).

5. Système de palier de roue (1) selon l'une quelconque des revendications 1, 3 ou 4, **caractérisé en ce que** l'élément à ressort (8) limite la précontrainte du palier de roue ou la précontrainte sur la bague intérieure du palier de roue (9) à 200 kN au maximum.

6. Système de palier de roue (1) selon l'une quelconque des revendications 1, 3, 4 ou 5, **caractérisé en ce que** l'élément à ressort (8) est disposé entre la tête de vis (12) et la bague intérieure du palier de roue (9).

7. Système de palier de roue (1) selon la revendication 2, **caractérisé en ce que** la vis de traction (7) est vissée avec un écrou (16) disposé sur le côté frontal (15) du tourillon d'essieu (3).

8. Système de palier de roue (1) selon la revendication 7, **caractérisé en ce qu'**un élément à ressort (8) est disposé entre l'écrou (16) et la bague intérieure du palier de roue (9).

9. Système de palier de roue (1) selon l'une quelconque des revendications précédentes, **caractérisé en ce que** la branche d'essieu (2) avec le tourillon d'essieu moulé (3) est fabriquée en fonte de moulage.
